(19) Europäisches Patentamt
European Patent Office
Office européen des brevets

(11) Publication number: 0 503 688 A2

# (12) EUROPEAN PATENT APPLICATION

(21) Application number: **92110111.9**

(22) Date of filing: **16.02.87**

(30) Priority: **25.02.86 US 832626**
**25.02.86 US 832627**
**30.12.86 US 947788**

(43) Date of publication of application:
**16.09.92 Bulletin 92/38**

(60) Publication number of the earlier application in accordance with Art.76 EPC: **0 235 998**

(84) Designated Contracting States:
**BE DE FR GB IT NL**

(51) Int. Cl.5: **B01J 31/10**, C08F 8/36

(71) Applicant: **THE DOW CHEMICAL COMPANY**
**2030 Dow Center Abbott Road P.O. Box 1967**
**Midland Michigan 48640-1967(US)**

(72) Inventor: **Childress, David Lee**
**Forest Hills, East HWY 59, P.O. Box 1212**
**La Grange, Texas 78945(US)**
Inventor: **Tasset, Emmett Lee**
**111 White Oak**
**Lake Jackson, Texas 77566(US)**
Inventor: **Weaver, John Doyl**
**243 Acacia**
**Lake Jackson, Texas 77566(US)**
Inventor: **Martin, Charles William**
**1110 Flag Drive**
**Lake Jackson, Texas 77566(US)**
Inventor: **Ezzell, Bobby R.**
**5 Deer Court**
**Lake Jackson, Texas 77566(US)**

(74) Representative: **Burford, Anthony Frederick et al**
**W.H. Beck, Greener & Co. 7 Stone Buildings**
**Lincoln's Inn**
**London WC2A 3SZ(GB)**

## (54) Methods for the preparation of supported fluorocarbonsulfonic acid polymers.

(57) A heterogeneous acid catalyst is prepared by treating a carrier material with a solution containing a fluorocarbonsulfonic acid polymer dissolved in a suitable solvent, removing the solvent, and heat treating the coated carrier to prevent the polymer from being leached off the carrier.Preferably, the substrate has pores of about 0.1 micrometer or greater and a surface area of 20 $m^2/g$ or less.

EP 0 503 688 A2

The polymers of interest to this invention are substantially fluorinated and have pendant chains containing sulfonic acid groups. The sulfonic acid groups exhibit extraordinarily high acid strength compared to sulfonic acids that are not fluorinated. Therefore, these materials are very useful as strong acid catalysts and have been shown to be effective in catalyzing many different reactions, such as: hydration of olefins and epoxides, dehydration of alcohols, alkylation and acylation of aromatic hydrocarbons, isomerization and alkylation of paraffins, nitration of organics, pinacolone rearrangements, esterification of carboxylic acids, hydrolysis of carboxylic acid derivatives, and Diels-Alder condensations. Some metal salts of fluorocarbonsulfonic acids, such as those in US-A-4,446,329, also have been shown to be useful in catalyzing some reactions.

Although the fluorocarbon polymers having pendant chains containing sulfonic acid groups are considered substantially insoluble, it is known that dilute solutions of these polymers can be prepared in an alcohol solvent. These solutions can then be used to coat supports to make catalyst pellets, for instance (see US-A-4,038,213). But the process of dissolving the polymer converts it from a substantially insoluble species to a species that is very soluble in many polar solvents. Thus, supported catalysts prepared by this method in the prior art have only limited utility because the polymer redissolves very easily in many solvents.

It has now surprisingly been discovered that a polymer having sulfonic acid groups can be deposited onto a support from a solution or dispersion and then annealed at an elevated temperature, thereby rendering the polymer insoluble. This annealing step unexpectedly reduces polymer leach during a reaction, thereby resulting in a more durable and long lasting catalyst. By supporting the polymer on a carrier, the surface area of the catalyst is increased, and this in turn improves the catalytic efficiency and lowers the cost of the catalyst.

Thus, according to the present invention, there is provided a method of supporting a fluorinated polymer having pendant chains containing sulfonic acid groups, on a substrate, comprising the steps:

(a) soaking a substrate with a solution or dispersion that contains said polymer:

(b) removing the solvent or dispersing medium from the mixture; and

(c) heating the remaining composition to above the glass transition temperature of said polymer for a sufficient time to render the polymer insoluble.

The final heat treatment, or annealing, of the composition increases the resistance of the polymer to being leached from the carrier surface and it results in a more durable, and therefore more efficient acid catalyst. In addition, other polymer coated articles, such as ion specific electrodes, prepared by the techniques described herein also would be greatly improved.

The polymers that are applicable to this invention have structures that include a substantially fluorinated carbon chain that has attached to it side chains that are also substantially fluorinated and contain sulfonic acid groups or derivatives of sulfonic acid groups. They may contain sulfonate salts of metals, such as iron, aluminum, zinc, copper, chromium, and others. There may be other side chains present that do not contain sulfonic acid groups, if desired, such as fluorinated alkyl or ether chains with no other functional group attached to them. There also may be atoms present in these chains other than carbon and fluorine, such as oxygen, chlorine, and bromine. Examples of these polymers are those described in US-A-3,282,875; 4,329,435; 4,330,654 and 4,358,545. The fluorocarbon portion of the polymer molecule contributes such desirable properties as high thermal and chemical stability and low solubility. The sulfonic acid groups exhibit extraordinarily high acid strength compared to sulfonic acids that are not fluorinated. Therefore, these materials are very useful as strong acid catalysts and they have been shown to be effective in catalyzing many different types of reactions.

Typical polymers that may be used in this invention have the general structure described below:

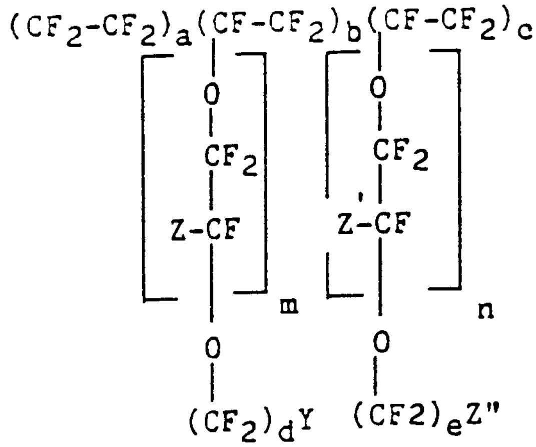

wherein Y is $SO_3H$;

Z, Z', and Z'' are independently F, Cl, Br, $CF_3$, $CF_2Cl$, or fluorinated alkyl;

a and b are independently positive integers with the provision that the ratio of a/b varies from 2 to 50:

c is 0 or an integer greater than 0;

m and n are independently 0 or an integer of 1 to 4;

and

d and e are independently an integer of 2 to 5.

In the identified variables, the value of a variable at one location in the formula does not limit the value at another location in the formula. At the various occurrences of the m, n, d or e, the values can be equal or different. The same is true of the radical Z at the various locations. In that sense, the values are said to be 'independent'.

The composition of the carrier is not critical, and the properties that are considered desirable for a carrier may vary in different applications. Properties that may be important in some situations include high crush strength, high porosity, chemical resistance, thermal stability, and low cost. In US-A-4,038,213, it is taught that the carrier should have high surface area and an average pore diameter of 0.005 to 0.06 micrometer. In fact, this is not the case. A support with low surface area, less than 1 $m^2/g$, can be used to prepare a catalyst with surprisingly high catalytic efficiency. Preferably, the support has a surface area of less than 20 $m^2/g$, most preferably the surface area is 0.25 $m^2/g$. In all cases, the carrier must be resistant to the sulfonic acid polymer solution and to the high temperature reached during the annealing procedure. Some representative materials that can serve as carriers include alumina, silica, zeolites, silicon carbide, silica-alumina, .porous glass, ceramic, spinel, clay, and carbon. The preferred amount of polymer to support is between 0.1 and 50 weight percent, preferably, up to 25 percent. The optimum amount of polymer on the support is dependent on a number of variables including the specific gravity of the support, the pore size and the properties of the reaction medium. In general, the productivity in a reaction should increase as the amount of polymer increases up to the optimum amount. Above this amount portions of the polymer become increasingly inaccessible to the reactants and the efficiency of the catalyst decreases. It is preferred therefore that the weight percent polymer on the support should not exceed the optimum level for the particular support and the particular reaction being catalyzed. For alumina supports described herein, the optimum level may be as low as 13 to 15 weight percent while the optimum for silicon carbide supports may be 20 to 25 weight percent. For given reactions and given supports, this optimum amount can vary over wide ranges up to as high as 50 weight percent. There may be instances in which the compositions prepared by the process of this invention may be used for applications other than acid catalysis. In these instances, the carriers may be of some form or material other than those described above.

In the method of this invention the polymer preferably is dissolved by heating it with an aqueous alcohol, particularly 50 percent aqueous ethanol, to 250 ° C or higher for several hours in a high pressure autoclave. This converts the polymer from a species that is substantially insoluble to a species that is very soluble in many polar solvents. The resulting mixture may not be a true solution, but instead may be a dispersion of finely divided particles. These mixtures can be filtered through a 0.2 micrometer filter. Other solvents and mixtures of solvents may also be effective in dissolving the polymer.

The polymer is deposited on the carrier by soaking the carrier in the polymer solution or dispersion and then removing the solvent. Ordinarily, if this composition is treated again with a polar solvent, even at ambient temperature, the polymer redissolves very quickly, Thus, such a composition is not useful as a

heterogeneous catalyst in many applications. However, heating the composition to a sufficient temperature for a sufficient time renders the polymer insoluble and prevents it from redissolving. Such a composition is much more useful as an acid catalyst due to its improved durability. This process can be reversed by repeating the high temperature dissolution in 50 percent ethanol in order to recover the polymer from the carrier.

Reducing the solubility by heating the polymer can be referred to as an annealing process. Annealing probably can occur at any temperature above the glass transition temperature of the polymer, which occurs around 20 ° C to 50 ° C for most fluorocarbons of interest here. But the viscosity of the polymer is very high, especially below 150 ° C, and the time required for the polymer to anneal is prohibitively long at low temperature. Also, the stability of most typical polymers decreases markedly above 300 ° C. These practicalities define lower and upper limits on the process step. Therefore, the annealing temperature preferably is above 100 ° C, more preferably between 150 ° C and 300 ° C, and most preferably between 200 ° C and 225 ° C. At 225 ° C, annealing is essentially complete within one hour.

The following examples are illustrative of certain specific embodiments of this invention.

## Example 1

The polymer used has the structure:

$$(CF_2CF_2)a(CFCF_2)_b$$
$$|$$
$$O$$
$$|$$
$$CF_2CF_2SO_3H$$

where the ratio a/b is such that the equivalent weight of the polymer is 930 gm/equivalent.

A glass-lined stirred autoclave was charged with 150 ml of 95 percent ethanol, 150 ml of water, and 15 gm of the fluorinated polymer. The autoclave was sealed and heated to 250 ° C with vigorous stirring for three hours. It was then cooled to room temperature and vented. Afterwards, the autoclave contained a light brown, slightly turbid liquid. The contents were filtered through a coarse filter (40 to 60 micrometers) and again through a fine filter (4 to 5.5 micrometers) to obtain a clear, slightly colored solution. By titration with 0.01N NaOH, the acid capacity of the solution was determined to be 0.0740 milliequivalents/g. This corresponds to approximately 6.9 weight percent polymer in the solution.

The solvent was evaporated from approximately 10 g of the filtered solution, leaving a brown solid residue. Upon addition of 5 ml of ethanol, the residue redissolved very readily without heating or agitation. The solvent was again removed and the flask containing the residue was heated to 155 to 165 ° C for three days. After cooling, ethanol was added to the residue. There was no apparent dissolution of the residue. This vividly demonstrates the change in solubility of the polymer induced by the heat treatment, or annealing.

## Example 2

An alumina catalyst polymer was dried and then soaked for 20 minutes in the polymer solution of Example 1. The excess liquid was decanted and the coated support was dried under vacuum for one hour at 50 to 75 ° C. The acid capacity was determined by titrating a portion of the coated product with standard NaOH. A second portion was washed in boiling ethanol for 30 minutes, dried at 100 ° C under vacuum for two hours and then titrated. A third portion was baked at 100 ° C for 24 hours prior to undergoing the same treatment as the second portion. A fourth portion was baked at 200 ° C for one hour prior to undergoing the same wash and dry treatment. The results of these procedures, described in Table I, show that one effect of annealing the supported polymer catalyst is reduced solubility of the polymer. Without annealing, hot ethanol leached all of the polymer from the support.

Table I

| Portion | Annealing | Solvent | Acid Capacity meq/g | Polymer Coat (wt %) |
|---|---|---|---|---|
| 1 | None | None | 0.0271 | 2.03 |
| 2 | None | Hot ethanol | 0.0 | 0.0 |
| 3 | 100°, 24 hr | Hot ethanol | 0.0102 | 0.94 |
| 4 | 200°, 1 hr | Hot ethanol | 0.0189 | 1.77 |

Example 3

A solution containing 9.4 weight percent polymer in 50 percent ethanol was prepared as in Example 1. An alumina catalyst support was soaked in this solution and the solvent was removed under vacuum. In each of three runs, the coated support was heated to 175°C for the time indicated in Table II and then was divided into two portions. One portion was titrated while the other portion was washed with boiling ethanol for 30 minutes, dried at 100°C under vacuum for two hours, and titrated. The results described in Table II show the positive effect of longer annealing time at 175°C on polymer leach.

TABLE II

| Run | Anneal Time | Before Ethanol Wash | | After Ethanol Wash | |
|---|---|---|---|---|---|
| | | Acid Capacity (meq/g) | Polymer Coating (wt %) | Acid Capacity (meq/g) | Polymer Coating (wt%) |
| 1 | 24 hrs | 0.0577 | 5.36 | 0.0279 | 2.60 |
| 2 | 48 hrs | 0.0557 | 5.17 | 0.0348 | 3.23 |
| 3 | 72 hrs | 0.0526 | 4.89 | 0.0495 | 4.60 |

Example 4

A catalyst composition with a polymer coat of 2.42 weight percent (acid capacity 0.026 meq/g) was prepared as in Example 2 and annealed at 250°C for one hour. It was loaded into three reactor tubes and

heated to 150 ° C. Diethylene glycol was pumped into the first of the reactors. 1,4- Dioxane was identified in the effluent of the first reactor. A solution of diphenyl ether and dodecene was fed into the second of the reactors. The major product of this second reactor was dodecylphenyl phenyl ether. Propylene and water were fed to the third reactor. 2- Propanol was collected in the effluent of the third reactor. These varied uses confirm the utility of the novel catalyst of this invention.

## Claims

**1.** A method of supporting a fluorinated polymer having pendant sulfonic acid groups on a substrate, characterised in that:
(a) the substrate is soaked with a solution or dispersion that contains said fluorinated polymer;
(b) the solvent or dispersing medium is removed from the mixture; and
(c) the remaining composition is heated to above the glass transition temperature of the polymer for a sufficient time to render the polymer insoluble.

**2.** A method as claimed in Claim 1, wherein the substrate has a pore size of at least 0.1 micrometer and/or a surface area of at most 20 $m^2/g$.

**3.** A method as claimed in Claim 1 or Claim 2, wherein the fluorinated polymer has the structure:

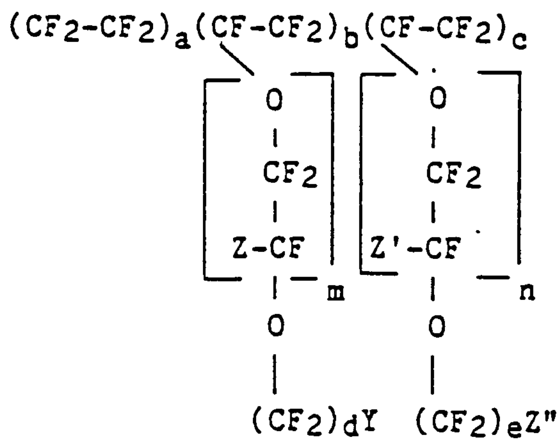

wherein:
Y is $SO_3H$;
Z, Z', and Z" are independently F, Cl, Br, $CF_3$, $CF_2Cl$, or fluorinated alkyl;
a and b independently positive integers with the provision that the ratio of a/b varies from 2 to 50;
c is 0 or an integer greater than 0;
m and n are independently 0 or an integer of 1 to 4;
and
d and e are independently an integer of 2 to 5.

**4.** A method as claimed in any one of the preceding claims, wherein the temperature is between 150 ° C and 300 ° C.

**5.** A method as claimed in any one of the preceding claims, wherein the solvent is an alcohol or a mixture of an alcohol and water.

**6.** A method as claimed in any one of the preceding claims, wherein the dissolved or dispersed polymer passes through a 0.2 micrometer filter.

**7.** A method as claimed in any one of the preceding claims, wherein the weight percent ratio of polymer on support is 0.1 to 50 weight percent.

**8.** A method as claimed in any one of the preceding claims, wherein the support has a surface area of

0.25 $m^2/g$.